# EUROPEAN PATENT SPECIFICATION

(11) **EP 2 399 730 B1**
(45) Date of publication and mention of the grant of the patent: **04.12.2013**
(21) Application number: 11003023.6
(22) Date of filing: 11.04.2011
(51) Int. Cl.: B29D 30/06, B29C 33/02, B29C 33/10

(54) **Mold for a tire, method for manufacturing a mold and method for manufacturing a tire using the mold**
Form für Reifen, Verfahren zur Herstellung einer Form und Verfahren zur Herstellung eines Reifens unter Verwendung der Form
Moule pour pneu, procédé de fabrication d'un moule et procédé de fabrication d'un pneu en utilisant ce moule

(30) Priority: 23.06.2010 JP 2010142145
(43) Date of publication of application: 28.12.2011
(73) Proprietor: Sumitomo Rubber Industries, Ltd., Hyogo-ken (JP)
(72) Inventor: Takahashi, Masanori, Kobe-shi Hyogo 651-0072 (JP); Shimizu, Keiji, Kobe-shi Hyogo 651-0072 (JP); Kodera, Takao, Kobe-shi Hyogo 651-0072 (JP)
(74) Representative: Manitz, Finsterwald & Partner GbR

(56) References cited:
- DE-A1- 10 308 152
- DE-A1-102004 041 361
- JP-A- 2 295 706
- JP-A- 2005 225 094

## Description

### TECHNICAL FIELD

The present invention relates to a mold for use in a process of vulcanizing a tire. The features of the preamble of the independent claims are known from DE 103 08 152 A1. Relevant technologies are also known from DE 10 2004 041361 A1, JP 2005 225094 A and JP 2 295706 A.

### BACKGROUND ART

In the process of vulcanizing a tire, a mold is used. Segmented molds and two-piece molds can be used in the vulcanizing process. In the vulcanizing process, a preformed raw cover is put into the mold. The raw cover is heated while being pressurized in a cavity surrounded by the mold and a bladder. Because of the pressurization and the heating, a rubber composition of the raw cover flows in the cavity. Because of the heating, a crosslinking reaction of the rubber takes place to obtain a tire. If air remains between the cavity surface of the mold and the raw cover during the pressurization, bareness occurs on the surface of the tire. The bareness deteriorates the quality of the tire. A general mold has vent holes. Through the vent holes, air is discharged.

A segmented mold includes a large number of tread segments each having a circular arc shape (hereinafter, referred to as segment). By arranging the tread segments, a ring-shaped cavity surface is formed. The segments are obtained by gravity casting or low-pressure casting using a casting mold. The segments may be obtained by precision casting (so-called die-cast) using a metallic casting mold.

As an example of such a mold for a tire, a mold disclosed in Japanese Laid-Open Patent Publication No. 2009-269245 is known. Each segment of the mold includes a block. The block has a cavity surface. The cavity surface is formed by direct carving. The block includes a base and a core which is accommodated in the base and integral to the base. The core consists of a large number of pieces. Each piece has a bolt hole. The large number of pieces are aligned, and a bolt is inserted through the bolt holes, so that the pieces are fixed. By so doing, the large number of pieces are integrated to form the core.

The integration of the core to the base is achieved by insert. Specifically, the core is put into a cavity of a casting mold. A molten metal is poured into the cavity. The molten metal solidifies to form the base, thereby forming the block including the base and the core inserted in the base. The block is cut to form the cavity surface in a surface thereof.

The integration of the core to the base by insert requires a large number of man-hours for the casting itself. The core is coated with a casting and fixed, and thus it is impossible to disassemble the block after manufacture. Therefore, a special heat treatment is required in order to remove dirt accumulated in the gaps between the pieces.

### PRIOR ART DOCUMENTS

### PATENT DOCUMENTS

[Patent Document 1] Japanese Laid-Open Patent Publication No. 2009-269245

### DISCLOSURE OF THE INVENTION

### PROBLEMS TO BE SOLVED BY THE INVENTION

The present invention is made in order to solve the above problem, and its object is to provide: a mold for a tire, which does not require a troublesome casting process while a core is firmly fixed, and which can be disassembled after manufacture; and a manufacturing method of the mold for a tire.

### SOLUTION TO THE PROBLEMS

The mold and the method of the present invention are defined in the independent claims.

Particular embodiments of the invention are the subject of the dependent claims.

### EFFECT OF THE INVENTION

In the mold according to the present invention, the block is firmly fixed without requiring a casting process. In addition, the mold can be disassembled even after being used. Thus, the holder and the block can be cleaned.

### BRIEF DESCRIPTION OF THE DRAWINGS

FIG. 1 is a plan view showing a part of a mold for a tire, according to one embodiment of the present invention;
FIG. 2 is a cross-sectional view taken along the line II-II in FIG. 1;
FIG. 3 is a perspective view of a segment of the mold in FIG. 1;
FIG. 4(a) is a plan view showing a block of the segment in FIG. 3;
FIG. 4(b) is a partially cutaway front view of the block;
FIG. 5 is a cross-sectional view taken along the line V-V in FIG. 4(a);
FIG. 6 is a cross-sectional view taken along the line VI-VI in FIG. 4(a);
FIG. 7 is a cross-sectional view of the segment taken along the line VII-VII in FIG. 3;
FIG. 8 is a cross-sectional view of the segment taken along the line VIII-VIII in FIG. 3;
FIG. 9 is an enlarged cross-sectional view taken along the line IX-IX in FIG. 5;
FIG. 10 is a perspective view before assembling base materials for the segment in FIG. 3;
FIG. 11 is a perspective view after assembling the base materials in FIG. 10;
FIG. 12 is a cross-sectional view showing each state before and after cutting the base materials in FIG. 11;
FIG. 13 is a plan view showing a segment of a mold according to another embodiment of the present invention;
FIG. 14 is a cross-sectional view taken along the line XIV-XIV in FIG. 13;
FIG. 15 is a cross-sectional view showing a segment of a mold according to still another embodiment of the present invention, and corresponding to FIG. 14;
FIG. 16 is a perspective view showing a segment of a mold according to still another embodiment of the present invention;
FIG. 17 is a cross-sectional view taken along the line XVII-XVII in FIG. 16;
FIG. 18 is a cross-sectional view taken along the line XVIII-XVIII in FIG. 16;
FIG. 19 is a perspective view showing a block of the segment in FIG. 16;
FIG. 20 is a perspective view before assembling base materials for the segment in FIG. 16; and
FIG. 21 is a perspective view after assembling the base materials in FIG. 20.

### MODE FOR CARRYING OUT THE INVENTION

The following will describe in detail the present invention on the basis of preferred embodiments with reference to the accompanying drawings.

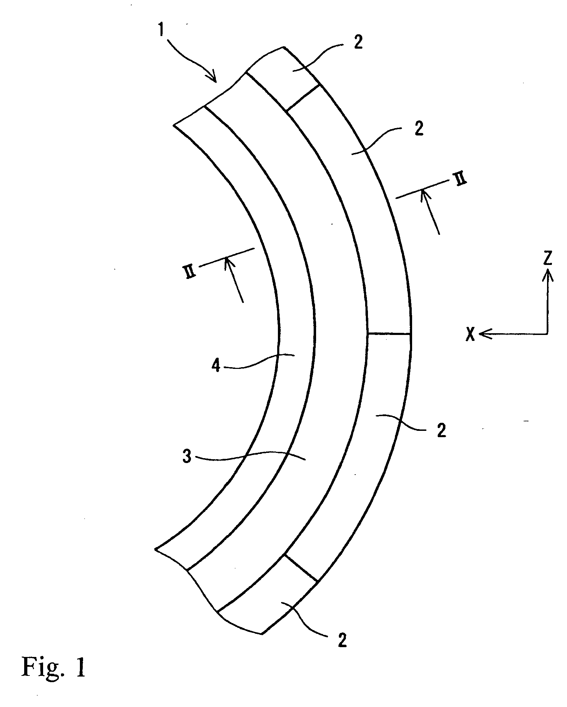

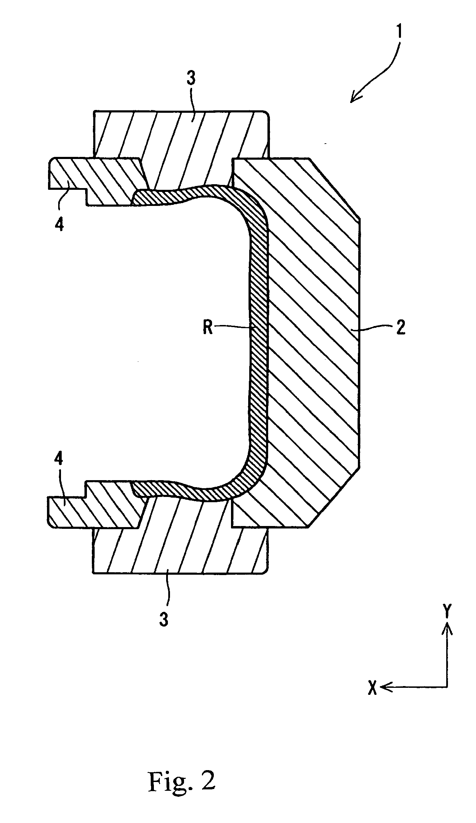

FIG. 1 is a plan view showing a part of a mold for a tire (hereinafter, referred to merely as mold) 1 according to one embodiment of the present invention. FIG. 2 is an enlarged cross-sectional view taken along the line II-II in FIG. 1. The mold 1 includes a large number of segments 2, a pair of upper and lower side plates 3, and a pair of upper and lower bead rings 4. A planar shape of each segment 2 is substantially a circular arc. The large number of segments 2 are connected in a ring. The number of the segments 2 is normally 3 or more but 20 or less. The side plates 3 and the bead rings 4 are substantially ring-shaped. The mold 1 is a so-called "segmented mold". In FIG. 2, what is indicated by R is a raw cover.

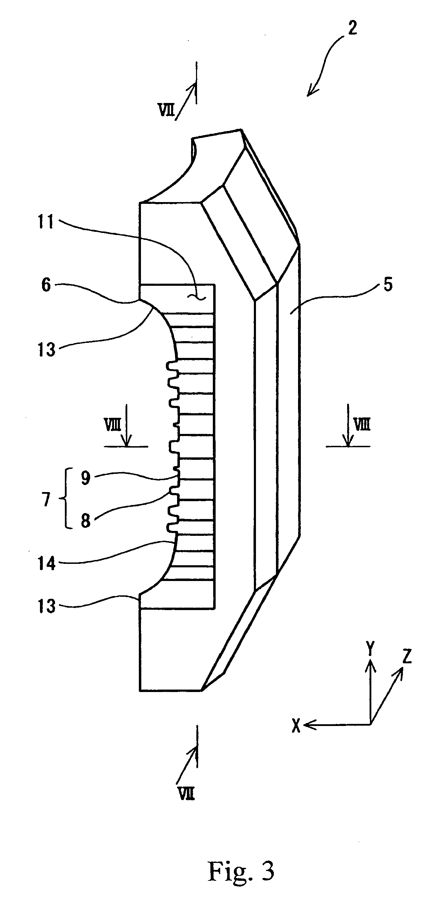

FIG. 3 is a perspective view showing the segment 2 of the mold 1 in FIG. 1. In FIG. 3, an arrow X indicates a radial direction, an arrow Y indicates an axial direction, and an arrow Z indicates a circumferential direction. This is the same in other drawings. The segment 2 includes a holder 5 and a block 6. The holder 5 is formed from steel or an aluminum alloy. The block 6 is mounted on the holder 5. On the holder 5, a plurality of blocks 6 may be mounted so as to be aligned in the circumferential direction Z.

The block 6 has a cavity surface 7. The cavity surface 7 has projections 8 and recesses 9. The projections 8 correspond to grooves of a tread of a tire. The recesses 9 correspond to blocks of a tread of a tire. By the projections 8 and the recesses 9, a tread pattern is formed on a tire. The shapes of the projections 8 and the recesses 9 are decided as appropriate according to a tread pattern. Note that, in FIG. 2, the projections 8 and the recesses 9 are omitted.

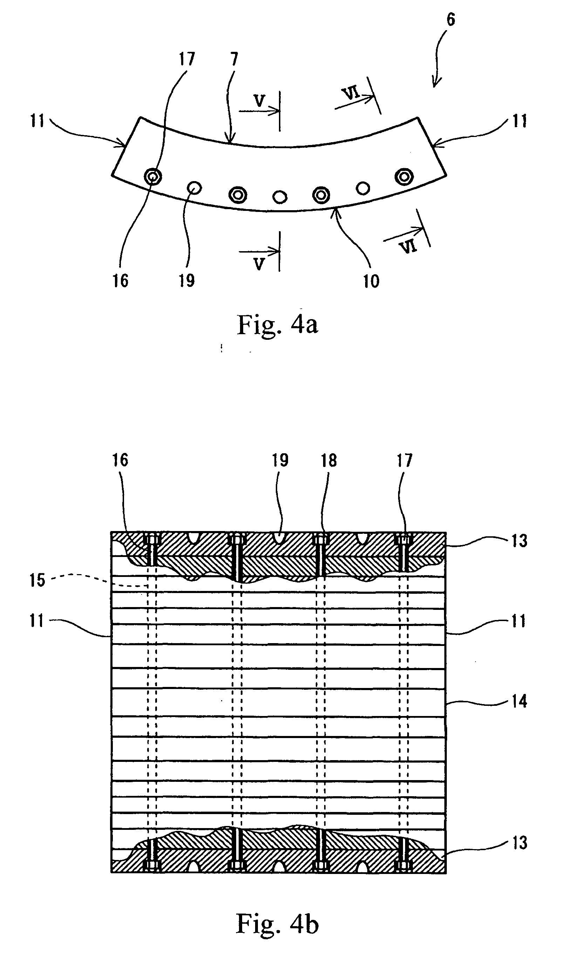

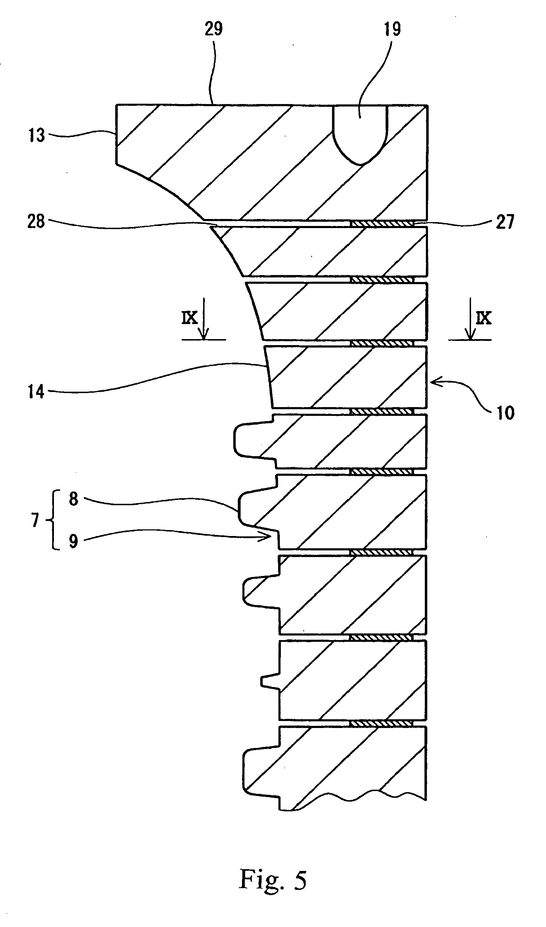

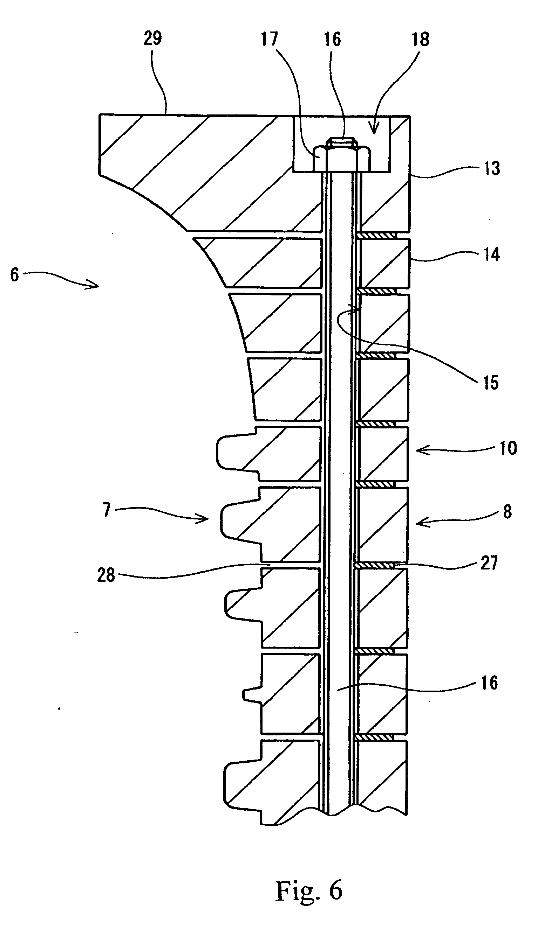

FIG. 4(a) is a plan view showing the block 6 of the segment 2 in FIG. 3, and FIG. 4(b) is a front view of the block 6. FIG. 5 is an enlarged cross-sectional view taken along the line V-V in FIG. 4(a). FIG. 6 is an enlarged cross-sectional view taken along the line VI-VI in FIG. 4(a). The block 6 has the cavity surface 7 as well as a back surface 10, two division surfaces 11, and upper and lower end surfaces 29. The back surface 10 faces the cavity surface 7.

The block 6 has two end pieces 13 and a large number of intermediate pieces 14 located between these end pieces 13. Each of the pieces 13 and 14 has a plate shape. Each piece 14 is formed from an aluminum alloy. All the pieces 13 and 14 are aligned in the axial direction Y. Each of the pieces 13 and 14 has bolt holes 15 which are located in a corresponding relation to those of the other pieces. Bolts 16 are inserted through the bolt holes 15. Nuts 17 are screwed onto both ends of each bolt 16. Each end piece 13 has, at each bolt hole 15 thereof, a counter bore 18 for receiving the nut 17. Thus, the bolts 16 and the nuts 17 does not protrude from the end surfaces 29 of the end pieces 13. In this embodiment, all the pieces 13 and 14 are fastened together by four bolts 16 and nuts 17.

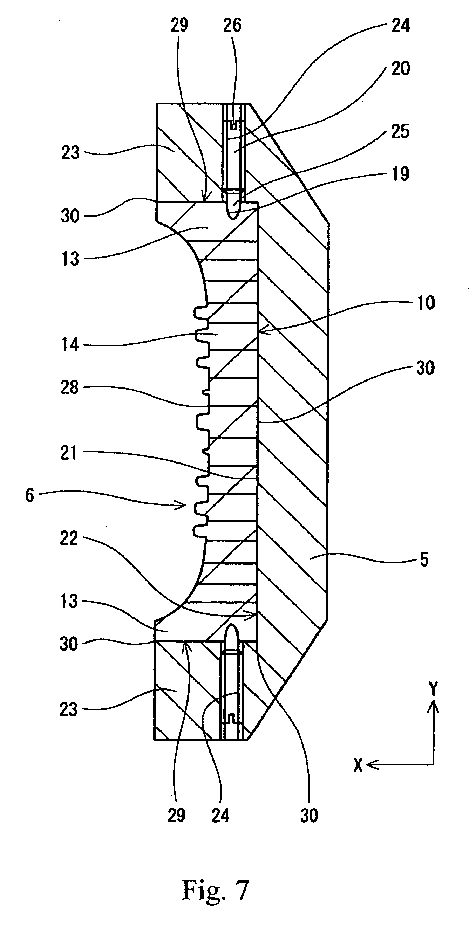

Each end piece 13 has, in the end surface 29, fixing pin holes 19 located so as to avoid the bolt holes 15 and the counter bores 18. As will be described later, the pin holes 19 are used for fixing the block 6 to the holder 5 by fixing pins 20 (FIG. 7). In this embodiment, each end piece 13 has three pin holes 19. However, the number of the pin holes is not limited to this number.

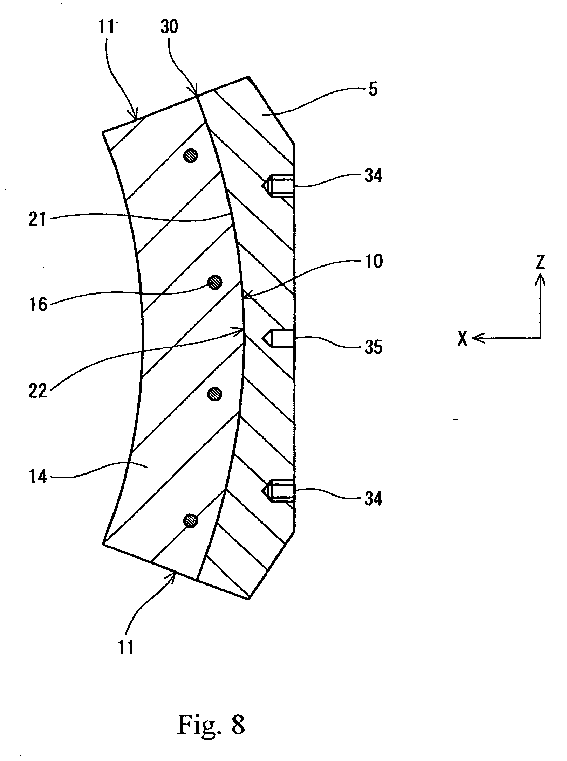

As is obvious from FIGS. 7 and 8, a recess 21 is formed in the holder 5 by cutting, such that the block 6 can be closely fitted therein. The recess 21 is defined by a bottom surface 22 and inner surfaces of a pair of facing side walls 23, and thus has a channel shape with a generally rectangular cross section. The recess 21 has a shape with a complementary relation to the outer shape of the block 6. The bottom surface 22 of the recess 21 covers the back surface 10 of the block 6, and the side walls 23 of the recess 21 cover the upper and lower end surfaces (the end surfaces of the end pieces 13) 29, respectively, of the block 6. The division surfaces 11 of the block 6 are exposed (FIG. 3). The bottom surface 22 of the recess 21 is in contact with the back surface 10 of the block 6 fitted in the recess 21, with a slight clearance 30 being formed. The inner surfaces of the side walls 23 of the recess 21 are in contact with the upper and lower end surfaces, respectively, of the fitted block 6, with a slight clearance 30 being formed. These clearances 30 can be formed, for example, by forming ridges on the inner surface of the recess 21 and/or the outer surface of the block 6.

As shown in FIG. 7, screw holes 24 extend through the side walls 23 at locations corresponding to the pin holes 19 of the end pieces 13. The fixing pins 20 are screwed into the screw holes 24. Each fixing pin 20 has an external thread formed on the outer circumferential surface thereof other than a pointed end part having a predetermined length. Each fixing pin 20 has a pin portion 25 formed at the pointed end part thereof having the predetermined length, and the pin portion 25 has an outer diameter equal to or smaller than the root diameter of the external thread. By the fixing pin 20 being screwed into the screw hole 24, the pin portion 25 is engaged with the pin hole 19 of the end piece 13. Thus, the block 6 is fixed to the recess 21. In a state of being screwed into the screw hole 24, the fixing pin 20 is buried at its rear end in the screw hole 24. The fixing pin 20 has, at its rear end, an engagement groove 26 for a rotation operation with a screwdriver. By loosening or removing the fixing pin 20, the block 6 can be taken out of the recess 21. In this manner, the fixing pin 20, together with the screw hole 24 and the pin hole 19, constitutes a fixing member which detachably fixes the block 6 to the recess 21. As shown in FIG. 8, the holder 5 has, in its back surface, screw holes 34 for screwing holding eyebolts or the like therein, and a pin hole 35 for positioning. These holes 34 and 35 do not extend to the inside of the recess 21.

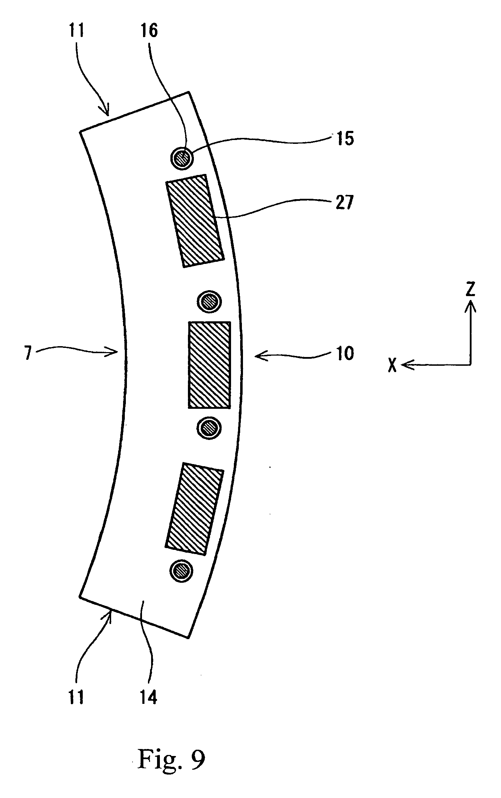

As shown in FIGS. 5 and 6, first shims 27 are interposed between the adjacent pieces 13 and 14 and between the adjacent pieces 14 in the block 6. By the nuts 17 being tightened, the pieces 13 and 14 squeeze the first shims 27. By the first shims 27, first slits 28 are formed between the adjacent pieces 13 and 14 and between the adjacent pieces 14. The first slits 28 extend in the radial direction X and the circumferential direction Z. The first slits 28 extend from the cavity surface 7 to the back surface 10. Thus, the first slits 28 communicate with the clearances 30. Each first shim 27 is formed from a metal such as stainless steel. Each first shim 27 has a thin plate shape. As shown in FIG. 9, a planar shape of each first shim 27 is substantially rectangular. The rectangular first shim 27 can be easily manufactured.

FIG. 9 is an enlarged cross-sectional view taken along the line IX-IX in FIG. 5. FIG. 9 shows an intermediate piece 14, a bolt 16, and three first shims 27. The first shims 27 are located so as to avoid the bolt holes 15. In other words, the bolts 16 do not extend through any first shim 27. Since the first shims 27 do not need to have holes for the bolts 16, the first shims 27 can be easily manufactured. In FIG. 9, the projections 8 and the recesses 9 for a tread pattern are omitted.

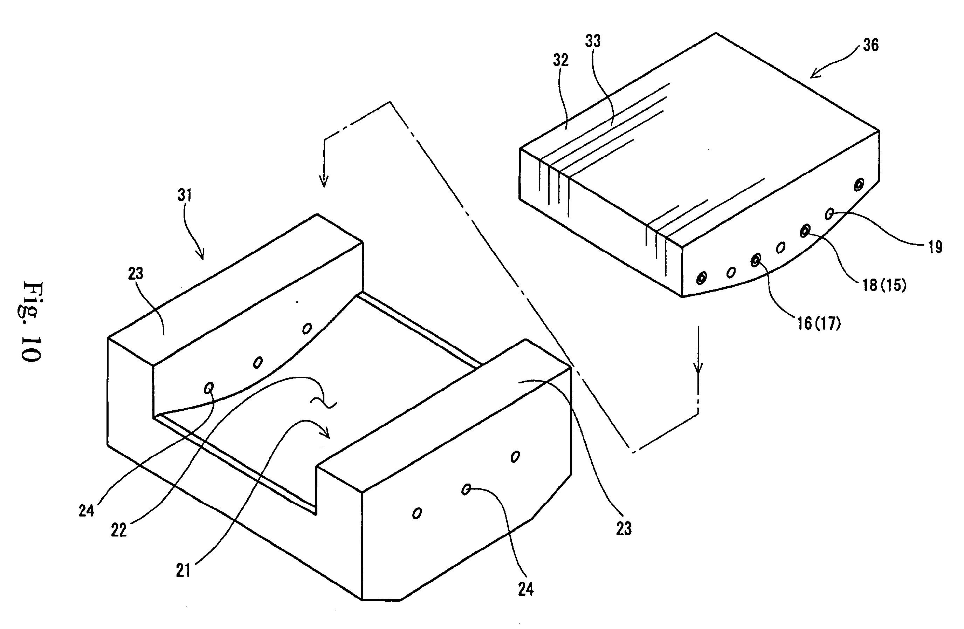

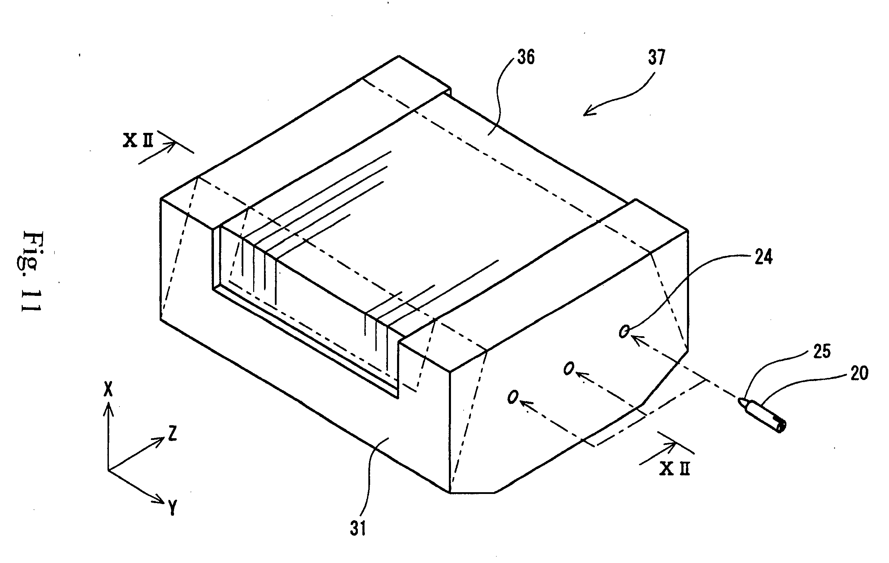

Referring to FIGS. 10 and 11, a method of manufacturing the segment 2 will be briefly described. First, a base material (referred to as holder base material) 31 for the holder 5, a base material (referred to as end piece base material) 32 for each end piece 13, and a base material (referred to as intermediate piece base material) 33 for each intermediate piece 14, are prepared. As shown in FIG. 10, the holder base material 31 is preferably obtained by forming a forged aluminum alloy into a rectangular parallelepiped shape, and then forming the recess 21 therein by cutting. The bottom surface 22 of the recess 21 has a partial cylinder shape. A pair of the side walls 23 are vertically provided so as to face each other across the bottom surface 22. The screw holes 24 are formed in each side wall 23 so as to extend therethrough from the outside of the side wall 23 to the inside of the recess 21.

Each of the piece base materials 32 and 33 has a plate shape, and each of their planar shapes is a shape in which one side of a rectangle is changed to a circular arc shape. The radius of curvature of the circular arc agrees with the radius of curvature of the bottom surface of the recess 21. The bolt holes 15 are formed in each of the end piece base material 32 and the intermediate piece base material 33, and the counter bores 18 and the pin holes 19 are further formed in the end piece base material 32. These 15, 18, and 19 have been already described. As shown in FIG. 10, two end piece base materials 32, intermediate piece base materials 33 to be located between the end piece base materials 32, and the first shims 27 to be located between the piece base materials 32 and 33 and between the piece base materials 33, are stacked. The bolts 16 are inserted through the bolt holes 15, and the nuts 17 are tightened. Thus, all the piece base materials 32 and 33 are fastened together to form a block base material 36. The block base material 36 has a shape in which one surface of a rectangular parallelepiped is changed to a partial cylinder shape.

As shown in FIG. 11, the block base material 36 is fitted into the recess 21 of the holder base material 31. The fixing pins 20 are screwed into the screw holes 24 of the holder base material 31, and the pin portions 25 of the fixing pins 20 at their pointed ends are inserted into the pin holes 19 of the block base material 36. Thus, the block base material 36 and the holder base material 31 are fixed to each other to form a segment base material 37. In FIG. 11, the external thread of the fixing pin 20 is omitted. Both end surfaces of the segment base material 37 are cut so as to be inclined as indicated by a chain double-dashed line.

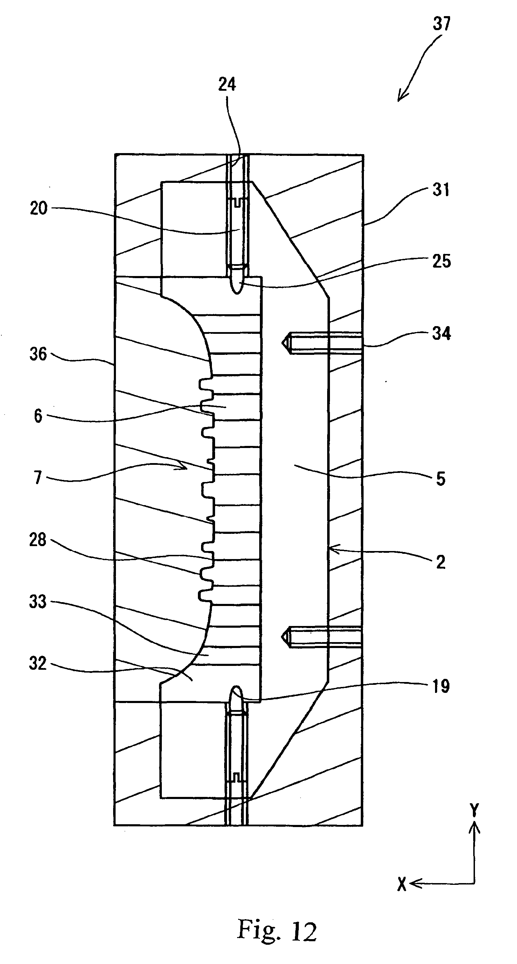

As shown in FIG. 12, only a hatched portion is removed by cutting the segment base material 37, to form a segment (a white background portion in the drawing) 2. Each of the fixing pins 20 has such a length that its rear end is not located in a removal range indicated by the hatching, in a state of being screwed into the screw hole 24 of the holder base material 31.

A large number of the piece base materials 32 and 33 and a large number of the first shims 27 are alternately stacked (the first shims 27 are not shown in FIG. 12). These piece base materials 32 and 33 and first shims 27 are integrated by the bolts 16 and the nuts 17. The cavity surface 7 having a rugged pattern is formed by the above-described cutting. In this method, the rugged pattern is formed by direct carving. The cutting is typically cutting with a tool. The cutting may be performed by high energy density processing. Specific examples of the high energy density processing include electro-chemical machining, electro-discharge machining, wire cut electro-discharge machining, laser beam machining, and electron beam machining. Since the rugged pattern is formed by direct carving, degree of freedom in the shape of the rugged pattern is high. In the rugged pattern, accuracy of dimension is high. The segment 2 is obtained by this cutting.

In a tire manufacturing method in which the mold 1 is used, a raw cover is obtained by preformation. The raw cover is put into the mold 1 in a state where the mold 1 is opened and a bladder is contracted. At this stage, a rubber composition of the raw cover is in an uncrosslinked state. The mold 1 is clamped and the bladder is expanded. The raw cover is pressed against the cavity surface 7 of the mold 1 by the bladder, and pressurized. The raw cover R in this state is shown in FIG. 2. The raw cover is heated at the same time. Because of the pressurization and the heating, the rubber composition flows. Because of the heating, a crosslinking reaction of the rubber takes place to obtain a tire. The process of pressurizing and heating the raw cover is referred to as a vulcanizing process.

As described above, the first slits 28 are exposed in the cavity surface 7 (FIGS. 5 to 7), and thus air between the raw cover and the cavity surface 7 moves through the first slits 28 during the vulcanizing process. The air reaches the division surfaces 11 and is discharged. Even air in areas distant from the division surfaces 11 can move through the first slits 28 to the division surfaces 11. Air can be discharged also through the first slits 28 and the bolt holes 15. By the movement and the discharge of the air, occurrence of bareness is prevented. In the mold 1, the air can be sufficiently discharged even when no vent hole is provided. By the mold 1 which does not have any vent hole, a tire which does not have any spew portion is obtained. The tire has excellent appearance and excellent initial grip performance. A small number of vent holes may be provided together with the first slits 28.

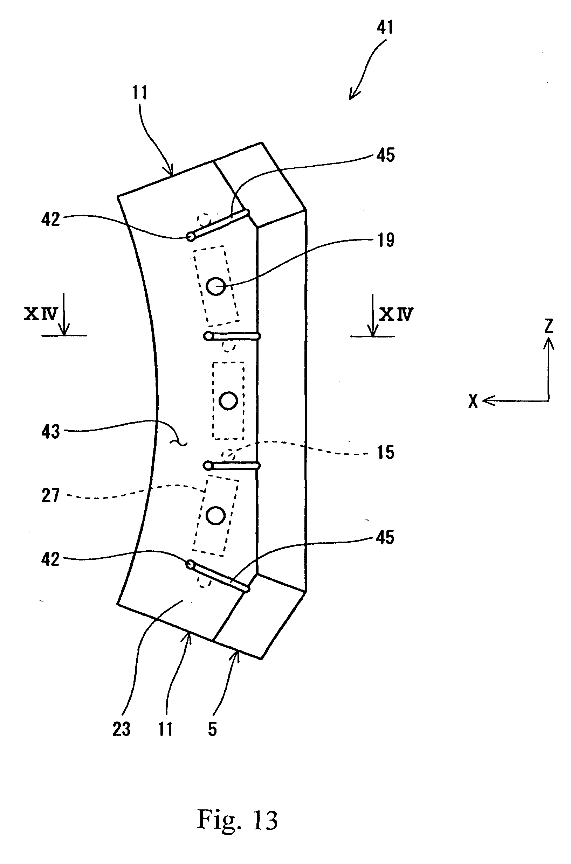

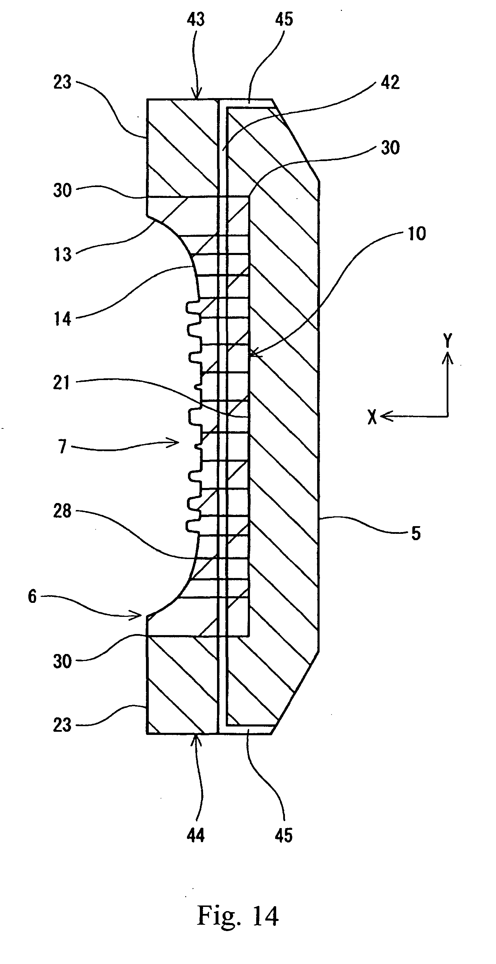

FIGS. 13 and 14 show another segment 41. The segment 41 is different from the segment 2 shown in FIG. 3 in that channels 42 for air flow are formed in the segment 41 so as to extend through the both side walls 23 of the holder 5 and all the pieces 13 and 14, and further in that groove-like vent lines 45 are formed in an upper surface 43 and a lower surface 44 of the segment 41 (the outer surfaces of the side walls 23) so as to communicate with the channels 42. Components of the segment 41 other than the above are substantially the same as the components of the segment 2 in FIG. 3. Thus, these components are designated by the same reference numerals as those of the components of the segment 2 in FIG. 3, and the description thereof is omitted.

The channels 42 extend in an axial direction Y of the segment 41. The channels 42 are spaced apart from the bolt holes 15 and the pin holes 19. The channels 42 are opened in the upper surface 43 and the lower surface 44 of the segment 41. The channels 42 extend through the segment 41 but does not extend through any first shim 27. In other words, the channels 42 communicate with the first slits 28. As described above, the first slits 28 communicate with the clearances 30, and thus the channels 42 also communicate with the clearances 30. The channels 42 provide communication between the first slits 28 and the clearances 30, and the outside. The channels 42 and the vent lines 45 allow air to flow therethrough. The vent lines 45 communicate with the openings of the channels 42. As shown in FIG. 13, each vent line 45 extends from the opening of the channel 42 outward in the radial direction X. Thus, even when the both upper and lower surfaces 43 and 44 of the segment 41 are covered with components which constitute a sector shoe (not shown), air can be discharged. A mold in which the segments 41 are used has excellent air discharge performance, and occurrence of bareness can be efficiently prevented.

As shown in FIG. 13, four channels 42 are provided in one segment 41. The number of the channels 42 provided in one segment 41 is decided as appropriate. These channels 42 are located on the circumference of a circle so as to be spaced apart from each other. Note that a plurality of the channels 42 provided in the segment 41 may be concentrically arranged in a plurality of rows. These channels 42 may be arranged randomly.

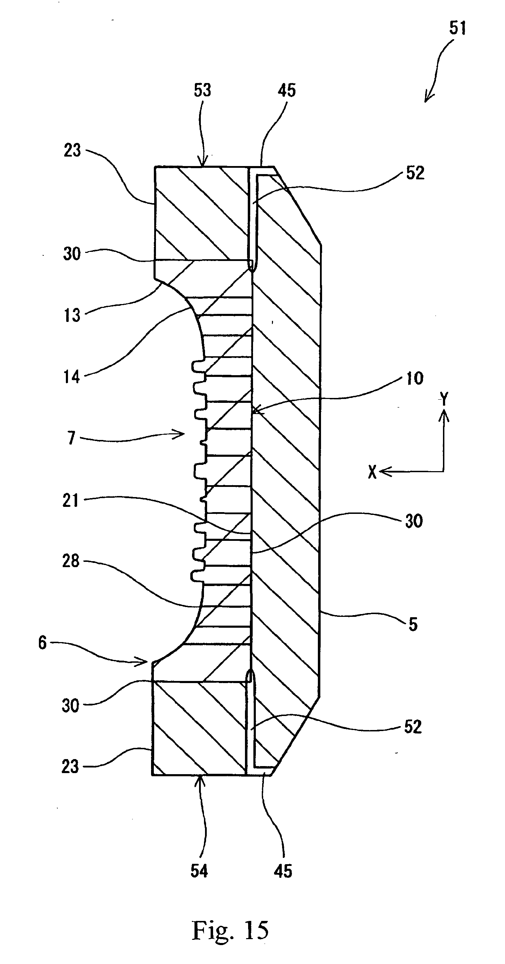

FIG. 15 shows still another segment 51. The segment 51 also has channels 52 and vent lines 45. The segment 51 is different from the segment 41 shown in FIG. 13 in that each channel 52 in the segment 51 has a bottom and is a hole which does not extend through the segment 51. Components of the segment 51 other than the channels 52 are substantially the same as the components of the segment 41 in FIG. 13. These components are designated by the same reference numerals as those of the components of the segment 41 in FIG. 13, and the description thereof is omitted.

The segment 51 has a channel 52 which is opened in an upper surface 53 of the segment 51, and a channel 52 which is opened in a lower surface 54 of the segment 51. Either channel 52 extends in an axial direction Y of the segment 51. The channels 52 are located on the circumference of a circle so as to be spaced apart from each other. Note that a plurality of the channels 52 provided in the segment 51 may be concentrically arranged in a plurality of rows. These channels 52 may be arranged randomly.

The channels 52 extend to the clearances 30 to provide communication between the clearances 30 and the outside. A part of air moving in the clearances 30 is discharged through the channels 52 to the outside. Air moving in the first slits 28 is also discharged through the clearances 30 and the channels 52 to the outside. The channels 52 can contribute to discharge of air. A mold in which the segments 51 are used has excellent air discharge performance, and occurrence of bareness can be efficiently prevented. Note that, by the lengths of the channels 52 being adjusted, the channels 52 may be configured to provide direction communication between the first slits 28 and the outside.

A method of manufacturing the segment 41 is almost the same as the method of manufacturing the segment 1 described with reference to FIGS. 10 to 12, and thus the description thereof is omitted.

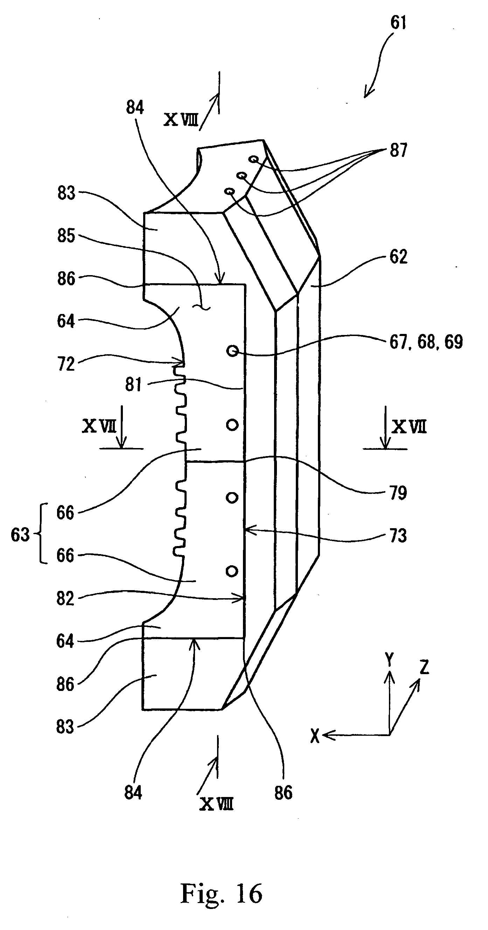

FIG. 16 shows still another segment 61. The segment 61 also includes a holder 62 and a block 63. In the block 63, end pieces 64 and intermediate pieces 65 are aligned in a circumferential direction Z, not in an axial direction Y. The block 63 has an outer shape which is a rectangular parallelepiped. The block 63 is fitted in a recess 81 of the holder 62. The block 63 includes two units 66 aligned in the axial direction Y. The number of the units is not limited to two, and may be three or more.

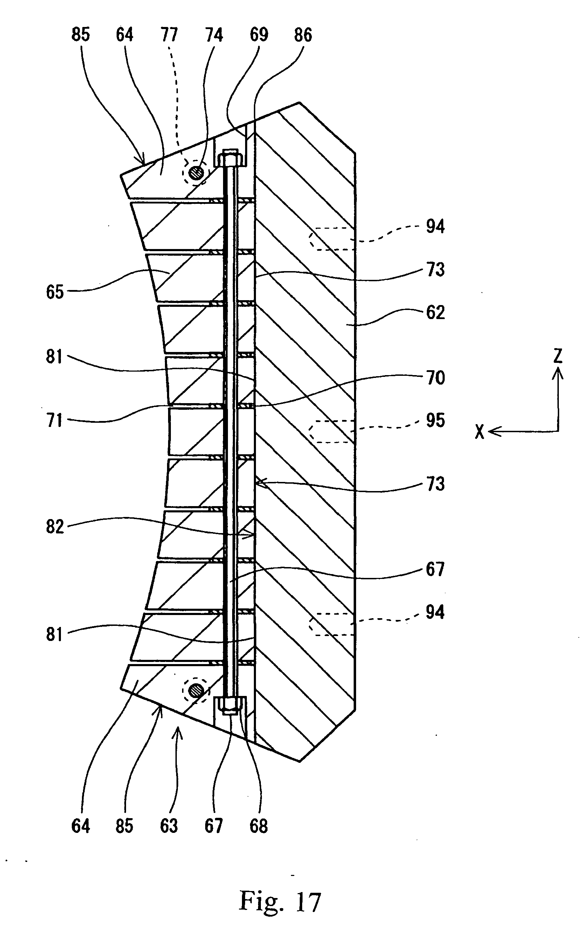

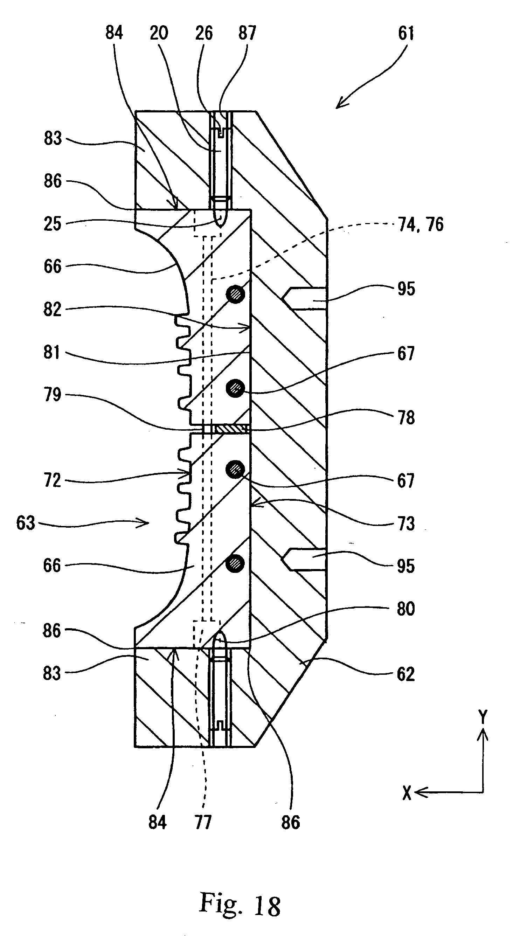

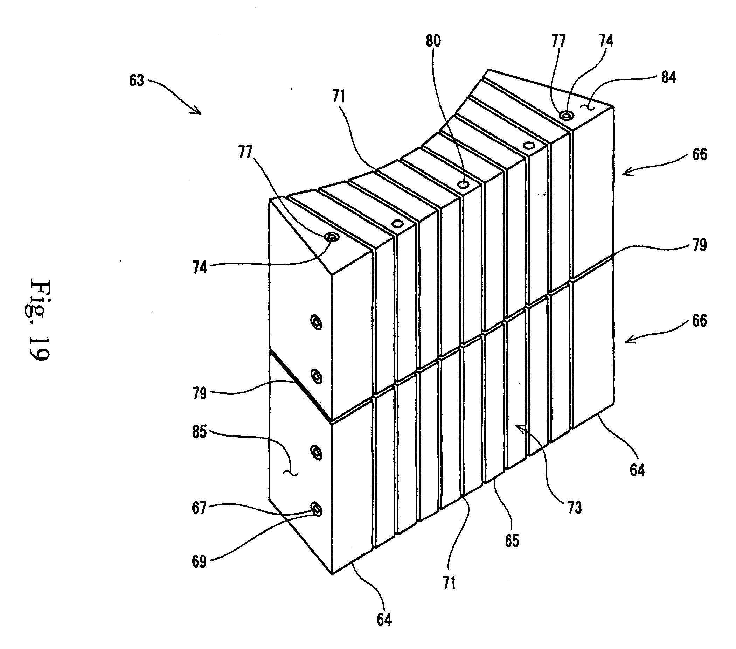

FIG. 17 is a cross-sectional view taken along the line XVII-XVII in FIG. 16. In FIG. 17, the projections 8 and the recesses 9 for a tread pattern are omitted. FIG. 18 is a cross-sectional view taken along the line XVIII-XVIII in FIG. 16. FIG. 19 is a perspective view showing the block 64 in the segment 61 in FIG. 16. As shown in FIGS. 17 and 19, for each unit 66, all pieces 64 and 65 are fastened together by bolts 67 and nuts 68. Each end piece 64 has, in each end surface thereof, a counter bore 69 for receiving the nut 68. None of the bolts 67 and the nuts 68 protrude from the end surfaces of the end pieces 64.

As shown in FIG. 17, second shims 70 are interposed between each piece 65. By the nuts 68 being tightened, the pieces 64 and 65 squeeze the second shims 70. The second shims 70 are located so as to avoid the bolts 67. In other words, the bolts 67 do not extend through any second shim 70. Each second shim 70 has the same structure as that of each first shim 27 shown in FIGS. 5 and 6. By the second shims 70, second slits 71 are formed between the adjacent pieces 64 and 65 and between the adjacent pieces 65. The second slits 71 extend in a radial direction X and the axial direction Y. The second slits 71 extend from a cavity surface 72 of the block 63 to a back surface 73 of the block 63.

As shown in FIGS. 18 and 19, the two units 66 are fastened together by bolts 74 and nuts (not shown) screwed onto both ends of each bolt 74. Specifically, each of the end pieces 64 of each unit 66 has a bolt hole 76 extending in the axial direction Y. Each of the end pieces 64 of each unit 66 has, in each side end surface thereof, a counter bore 77 for receiving the nut. None of the bolts 74 and the nuts protrude from the side end surfaces of the end pieces 64.

As shown in FIG. 18, third shims 78 are interposed between the two units 66. The third shims 78 are located so as to avoid the bolts 74. In other words, the bolts 74 do not extend through any third shim 78. By the third shims 78, a third slit 79 is formed between the two units 66. The third slit 79 extends in the radial direction X and the circumferential direction Z. The third slit 79 extends from the cavity surface 72 of the block 63 to the back surface 73 of the block 63.

As shown in FIGS. 18 and 19, some of the intermediate pieces 65 of each unit 66 have, in their side end surfaces, fixing pin holes 80 extending in the axial direction Y. As will be described later, the pin holes 80 are used for fixing the block 63 to the holder 62 by fixing pins. In this embodiment, the pin holes 80 are respectively formed in three intermediate pieces 65 which are located at intervals in each unit 66. Of course, the number of the intermediate pieces 65 having the pin holes 80 is not limited to three, and may be two or may be four or more.

As shown in FIGS. 16 and 18, the block 63 is fixed by fixing pins 20 (not shown in FIG. 16) in a state of being closely fitted in the recess 81 of the holder 62. The recess 81 is formed by cutting. The recess 81 is defined by a bottom surface 82 and inner surfaces of a pair of facing side walls 83, and thus has a channel shape with a generally rectangular cross section. The recess 81 has a shape with a complementary relation to the outer shape of the block 63. The bottom surface 82 of the recess 81 covers the back surface 73 of the block 63, and the side walls 83 of the recess 81 cover upper and lower end surfaces (the side end surfaces of all the pieces 64 and 65) 84, respectively, of the block 63. Division surfaces 85 of the block 63 are exposed (FIG. 16). The bottom surface 82 of the recess 81 is in contact with the back surface 73 of the block 63 fitted in the recess 81, with a slight clearance 86 being formed. The inner surfaces of the side walls 83 of the recess 81 are in contact with the upper and lower end surfaces 84, respectively, of the fitted block 63, with a slight clearance 86 being formed. These clearances 86 can be formed, for example, by forming ridges on the inner surface of the recess 81 and/or the outer surface of the block 63.

As shown in FIG. 18, screw holes 87 extend through the side walls 83 of the holder 62 at locations corresponding to the pin holes 80 of the three intermediate pieces 65. The fixing pins 20 are screwed into the screw holes 87. Each fixing pin 20 has the same structure as that of each fixing pin 20 shown in FIG. 7, and thus the description thereof is omitted. When the fixing pins 20 are screwed into the screw holes 87 of the holder 62, the pin portions 25 at their pointed ends are engaged with the pin holes 80 of the intermediate pieces 65. Thus, the block 63 is fixed to the recess 81. The fixing pins 20 are buried at their rear ends in the screw holes 87 in a state of being screwed into the screw holes 87. By loosening or removing the fixing pins 20, the block 63 can be taken out of the recess 81.

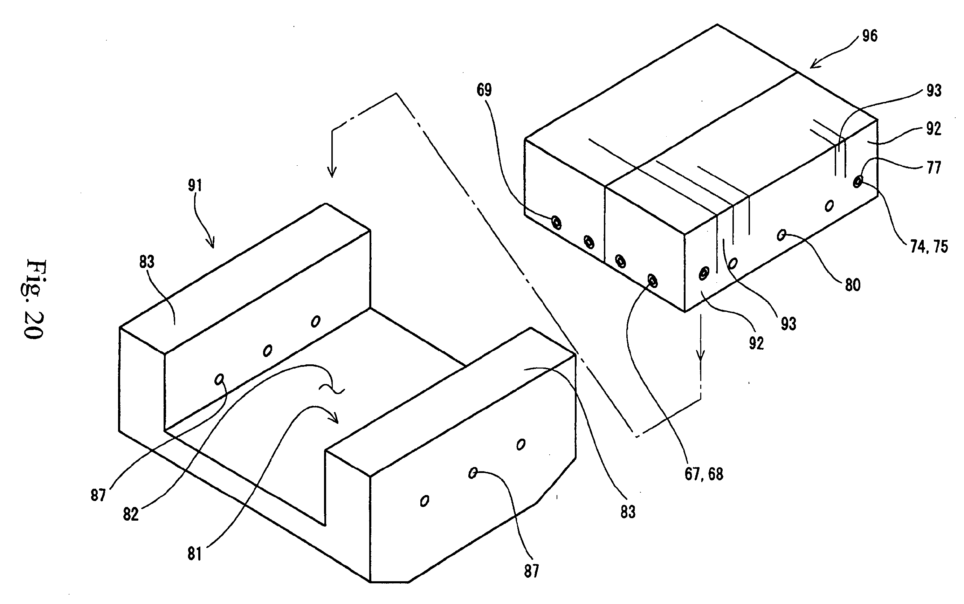

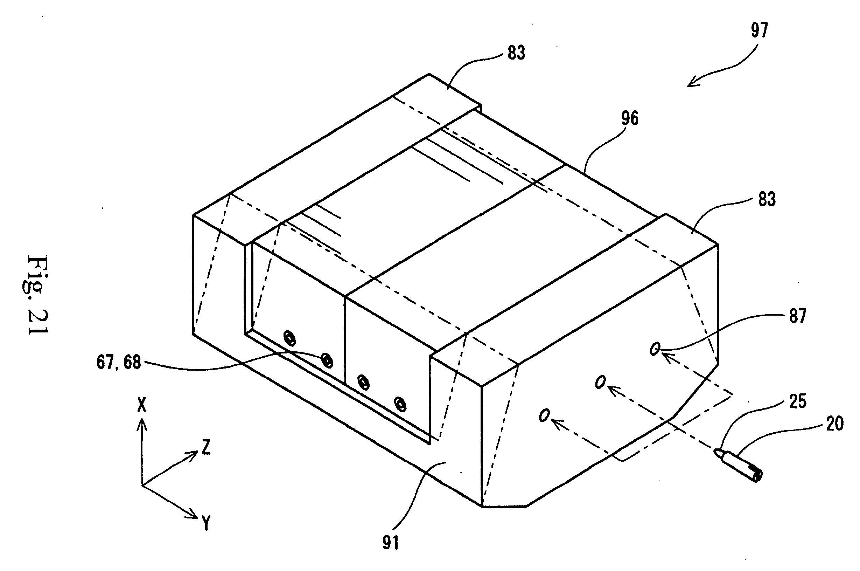

A method of manufacturing the segment 61 will be briefly described with reference to FIGS. 20 and 21. First, a base material (referred to as holder base material) 91 for the holder 62, a base material (referred to as end piece base material) 92 for each end piece 64, and a base material (referred to as intermediate piece base material) 93 for each intermediate piece 65, are prepared. As shown in FIG. 20, the holder base material 91 is obtained by forming a forged aluminum alloy into a rectangular parallelepiped shape, and then forming the recess 81 therein by cutting. A pair of the side walls 83 are vertically provided so as to face each other across the bottom surface 82. The screw holes 87 are formed in each side wall 83 so as to extend therethrough from the outside of the side wall 83 to the inside of the recess 81. Screw holes 94 for screwing holding eyebolts or the like, and pin holes 95 for positioning, are formed in a back surface of the holder 62 (FIGS. 17 and 18). These holes 94 and 95 do not extend to the inside of the recess 81.

The piece base materials 92 and 93 have plate shapes. The piece base materials 92 and 93 have the bolt holes, the counter bores 69, and the pin holes 80, and they have been already described. As shown in FIG. 20, two end piece base materials 92, a large number of intermediate piece base materials 93 to be located between the end piece base materials 92, and the second shims 70 to be located between the piece base materials 92 and 93 and between the piece base materials 93, are stacked. The bolts 67 are inserted through the bolt holes, and the nuts 68 are tightened. Thus, all the piece base materials 92 and 93 are fastened together to form a base material for each unit. The two unit base materials and the third shims 78 to be located between the unit base materials are stacked. The bolts 74 are inserted through the bolt holes 76 of each unit base material, and the nuts are tightened. Thus, the two unit base materials are integrated to form a block base material 96. The block base material 96 has a rectangular parallelepiped shape.

As shown in FIG. 21, the block base material 96 is fitted into the recess 81 of the holder base material 91. The fixing pins 20 are screwed into the screw holes 87 of the holder base material 91, and the pin portions 25 of the fixing pins 20 are inserted into the pin holes 80 of the block base material 96. Thus, the block base material 96 and the holder base material 91 are fixed to each other to form a segment base material 97. Both end surfaces of the segment base material 97 are cut so as to be inclined as indicated by a chain double-dashed line. The segment base material 97 is further cut to form a cavity surface and the like, and the segment 61 shown in FIG. 16 is completed.

A rugged pattern may not be formed on the cavity surface 7. By using the mold 1 which does not have a rugged pattern, a slick tire or a plain tire can be obtained. Even in the slick tire and the plain tire, the formation of spew portions is suppressed. The surface of the plain tire is cut to form a rugged pattern. Due to less spew portions, cutting of the plain tire is easy.

When the mold 1 is repeatedly used, accumulated matter attaches to the cavity surface 7. The accumulated matter impairs the quality of a tire. The accumulated matter needs to be removed. For the removal, the fixing pins 20 are loosened or removed, and then the block 6 or 63 is taken out of the recess 21 or 81 of the holder 5 or 62. Next, the bolts 16 are removed from the block 6 to disassemble into the pieces 13 and 14. In the case of the block 63 including a plurality of units 66, first, the bolts 74 are removed from the block 63 to disassemble into the plurality of units 66. Next, the bolts 67 are removed from each unit 66 to disassemble into the pieces 64 and 65. Each component is cleaned, and then the segment 2, 41, 51, or 61 is assembled in a manner reverse to the above.

In the examples described above, the slits 28, 71, and 79 are respectively formed by the shims 27, 70, and 78 being interposed between the pieces 13, 14, 64, and 65 and between the units 66. However, the present invention is not limited to these structures. For example, slits can be formed by forming ridges on the outer surfaces of the pieces 13, 14, 64, and 65 and the outer surfaces of the units 66.

### INDUSTRIAL APPLICABILITY

The mold according to the present invention is suitable for manufacturing various tires.

### DESCRIPTION OF THE REFERENCE CHARACTERS

- 1: mold (for tire)
- 2,41,51,61: segment
- 5,62: holder
- 6, 63: block
- 7, 72: cavity surface
- 10, 73: back surface
- 11, 85: division surface
- 13,64: end piece
- 14, 65: intermediate piece
- 16, 67: (piece fastening) bolt
- 17, 68: (piece fastening) nut
- 20: fixing pin
- 21, 81: recess
- 27: first shim
- 28: first slit
- 30, 86: clearance
- 31, 91: holder base material
- 32, 92: end piece base material
- 33, 93: intermediate piece base material
- 36, 96: block base material
- 37, 97: segment base material
- 42, 52: channel
- 45: vent line
- 66: unit
- 70: second shim
- 71: second slit
- 74: (unit fastening) bolt
- 78: third shim
- 79: third slit

## Claims

1. A mold (1) for a tire, which has a ring-shaped cavity surface (7) formed in an inner surface thereof, the mold comprises:
a block (6) having a plurality of aligned plate-like pieces (13, 14);
a holder (5) having a recess (21) in which the block (6) is allowed to be fitted;
a fixing member (20) which detachably fixes the block (6) fitted in the recess (21), to the recess (21);
a first slit (28) formed between the adjacent two pieces (13, 14) so as to extend in a circumferential direction (Z) of the ring-shaped cavity surface (7),
**characterized by**
a clearance (30) formed between the block (6) and the holder (5), wherein the first slit (28) extends from the ring-shaped cavity surface (7) to the clearance (30) at a back surface (10).

2. The mold according to claim 1, wherein
a channel (42, 52) for air flow is formed so as to provide communication between the clearance (30) and an outside, and to extend through the plate-like pieces (13, 14) and the first slit (28), and
the channel (42, 52) provides communication between the clearance (28) and the outside via the first slit (28).

3. The mold according to claim 2, further comprising a first shim (27) interposed between the adjacent two pieces (13, 14), wherein
the first slit (28) is formed by the first shim (27).

4. A mold for a tire, which has a ring-shaped cavity surface (72) formed in an inner surface thereof, the mold comprises:
a block (63) having a plurality of aligned plate-like pieces (65);
a holder (62) having a recess (81) in which the block (63) is allowed to be fitted;
a fixing member which detachably fixes the block (63) fitted in the recess (81), to the recess (81);
**characterized by**
a second slit (71) is formed between the adjacent two pieces (65) so as to extend in an axial direction (Y) of the ring-shaped cavity surface (72),
the mold further comprises:
a clearance (86) formed between the block (63) and the holder (62), wherein the second slit (71) extends from the ring-shaped cavity surface (72) to the clearance (86) at a back surface (73).

5. The mold according to claim 4, wherein
the block (63) includes a plurality of units (66) aligned in the axial direction (Y) of the ring-shaped cavity surface (72), and
a third slit (79) is formed between the adjacent two units (66) so as to extend in a circumferential direction (Z) of the ring-shaped cavity surface (72).

6. The mold according to claim 5, further comprising: a second shim (70) interposed between the adjacent two pieces (65); and a third shim (78) interposed between the adjacent two units (66), wherein
the second slit (71) is formed by the second shim (70), and
the third slit (79) is formed by the third shim (78).

7. A method for manufacturing a mold (1) for a tire, the method comprises the steps of:
forming a block base material (36, 96) by fixing a plurality of plate-like piece base materials (32, 92, 33, 93) in an aligned state;
forming a recess (21, 81) for fitting the block base material (36, 96), in a holder base material (31, 91) by cutting;
fitting the block base material (36, 96) into the recess (21, 81) of the holder base material (31, 91);
forming a segment base material (37, 97) by detachably fixing the block base material (36, 96) fitted in the recess (21, 81), to the recess (21, 81) by using a fixing member;
forming a segment (2, 41, 51, 61) by cutting the segment base material (37, 97) to form a cavity surface (7, 72); and
forming the mold (1) by connecting a plurality of the segments (2, 41, 51, 61) to each other,
wherein
in the step of forming the block base material (36, 96), a slit (28, 71) is formed by providing a shim (27, 70) between the adjacent piece base materials (32, 92, 33, 93), and
in the step of forming the segment (2, 41, 51, 61), the slit (28, 71) is exposed in the cavity surface (7, 72),
**characterized in that** the method further comprising
forming a clearance (30, 86) between the block base material (36, 96) and the holder base material (31, 91), wherein the slit (28, 71) extends from the cavity surface (7, 72) to the clearance (30, 86) at a back surface (10, 73).

8. A method for manufacturing a tire using the mold (1) according to any one of claims 1 to 6, the method comprises the steps of:
obtaining a raw cover by preformation;
putting the raw cover into a mold having a cavity surface (7, 72) formed in an inner surface thereof; and
pressurizing and heating the raw cover in the mold (1).

## Patentansprüche

1. Form (1) für einen Reifen, die eine ringförmige Hohlraumoberfläche (7) aufweist, die in einer Innenfläche davon gebildet ist, wobei die Form umfasst:
einen Block (6), der eine Mehrzahl von ausgerichteten, plattenartigen Stücken (13, 14) aufweist;
einen Halter (5), der eine Ausnehmung (21) aufweist, in die der Block (6) eingesetzt werden kann;
ein Befestigungselement (20), das den Block (6), der in die Ausnehmung (21) eingesetzt ist, abnehmbar an der Ausnehmung (21) befestigt;
einen ersten Schlitz (28), der zwischen den benachbarten zwei Stücken (13, 14) gebildet, so dass er sich in einer Umfangsrichtung (Z) der ringförmigen Hohlraumoberfläche (7) erstreckt,
**gekennzeichnet durch**
einen Zwischenraum (30), der zwischen dem Block (6) und dem Halter (5) gebildet ist, wobei sich der erste Schlitz (28) von der ringförmigen Hohlraumoberfläche (7) zu dem Zwischenraum (30) an einer Rückfläche (10) erstreckt.

2. Form nach Anspruch 1, wobei
ein Kanal (42, 52) für eine Luftströmung gebildet ist, so dass er eine Verbindung zwischen dem Zwischenraum (30) und einer Außenseite herstellt und sich durch die plattenartigen Stücke (13, 14) und den ersten Schlitz (28) erstreckt, und
der Kanal (42, 52) eine Verbindung zwischen dem Zwischenraum (28) und der Außenseite über den ersten Schlitz (28) herstellt.

3. Form nach Anspruch 2,
die ferner eine erste Scheibe (27) umfasst, die zwischen den benachbarten zwei Stücken (13, 14) angeordnet ist, wobei
der erste Schlitz (28) durch die erste Scheibe (27) gebildet ist.

4. Form für einen Reifen, die eine ringförmige Hohlraumoberfläche (72) aufweist, die in einer Innenfläche davon gebildet ist, wobei die Form umfasst:
einen Block (63), der eine Mehrzahl von ausgerichteten, plattenartigen Stücken (65) aufweist;
einen Halter (62), der eine Ausnehmung (81) aufweist, in die der Block (63) eingesetzt werden kann;
ein Befestigungselement, das den Block (63), der in die Ausnehmung (81) eingesetzt ist, abnehmbar an der Ausnehmung (81) befestigt;
**dadurch gekennzeichnet, dass**
ein zweiter Schlitz (71) zwischen den benachbarten zwei Stücken (65) gebildet ist, so dass er sich in einer axialen Richtung (Y) der ringförmigen Hohlraumoberfläche (72) erstreckt,
wobei die Form ferner umfasst:
einen Zwischenraum (86), der zwischen dem Block (63) und dem Halter (62) gebildet ist, wobei sich der zweite Schlitz (71) von der ringförmigen Hohlraumoberfläche (72) zu dem Zwischenraum (86) an einer Rückfläche (73) erstreckt.

5. Form nach Anspruch 4, wobei
der Block (63) eine Mehrzahl von Einheiten (66) umfasst, die in der axialen Richtung (Y) der ringförmigen Hohlraumoberfläche (72) ausgerichtet sind; und
ein dritter Schlitz (79) zwischen den benachbarten zwei Einheiten (66) gebildet ist, so dass er sich in einer Umfangsrichtung (Z) der ringförmigen Hohlraumoberfläche (72) erstreckt.

6. Form nach Anspruch 5,
die ferner eine zweite Scheibe (70) umfasst, die zwischen den benachbarten zwei Stücken (65) angeordnet ist; und eine dritte Scheibe (78), die zwischen den benachbarten zwei Einheiten (66) angeordnet ist, wobei
der zweite Schlitz (71) durch die zweite Scheibe (70) gebildet ist, und der dritte Schlitze (79) durch die dritte Scheibe (78) gebildet ist.

7. Verfahren zum Herstellen einer Form (1) für einen Reifen, wobei das Verfahren die Schritte umfasst:
Bilden eines Blockgrundmaterials (36, 96) durch Befestigen einer Mehrzahl von Grundmaterialien der plattenartigen Stücke (32, 92, 33, 93) in einem ausgerichteten Zustand;
Bilden einer Ausnehmung (21, 81) zum Befestigen des Blockgrundmaterials (36, 96) in dem Haltergrundmaterial (31, 91) durch Schneiden;
Befestigen des Blockgrundmaterials (36, 96) in der Ausnehmung (21, 81) des Haltergrundmaterials (31, 91);
Bilden eines Segmentgrundmaterials (37, 97) durch abnehmbares Befestigen des Blockgrundmaterials (36, 96), das in die Ausnehmung (21, 81) eingesetzt ist, an der Ausnehmung (21, 81) unter Verwendung eines Befestigungselements;
Bilden eines Segments (2, 41, 51, 61) durch Schneiden des Segmentgrundmaterials (37, 97), um eine Hohlraumoberfläche (7, 72) zu bilden; und
Bilden der Form (1) durch Verbinden einer Mehrzahl der Segmente (2, 41, 51, 61) miteinander,
wobei
in dem Schritt des Bildens des Blockgrundmaterials (36, 96) ein Schlitz (28, 71) gebildet wird, indem eine Scheibe (27, 70) zwischen den benachbarten Grundmaterialien der Stücke (32, 92, 33, 93) vorgesehen wird, und
in dem Schritt des Bildens des Segments (2, 41, 51, 61) der Schlitz (28, 71) in der Hohlraumoberfläche (7, 72) freigelegt wird,
**dadurch gekennzeichnet, dass** das Verfahren ferner umfasst
Bilden eines Zwischenraums (30, 86) zwischen dem Blockgrundmaterial (36, 96) und dem Haltergrundmaterial (31, 91), wobei sich der Schlitz (28, 71) von der Hohlraumoberfläche (7, 72) zu dem Zwischenraum (30, 86) an einer Rückfläche (10, 73) erstreckt.

8. Verfahren zum Herstellen eines Reifens unter Verwendung der Form (1) nach einem der Ansprüche 1 bis 6, wobei das Verfahren die Schritte umfasst:
Erhalten einer Rohdecke durch Vorformung;
Setzen der Rohdecke in eine Form, die eine Hohlraumoberfläche (7, 72) aufweist, die in einer Innenfläche davon gebildet ist; und
Unterdrucksetzen und Erwärmen der Rohdecke in der Form (1).

## Revendications

1. Moule (1) pour un pneumatique, qui comporte une surface de cavité de forme annulaire (7) formée dans une surface intérieure de lui-même, le moule comprenant :
un bloc (6) ayant une pluralité de pièces alignées semblables à des plaques (13, 14) ;
un support (5) ayant un évidement (21) dans lequel le bloc (6) est amené à se loger ;
un élément de fixation (20) qui fixe dans l'évidement (21) de façon détachable le bloc (6) logé dans l'évidement (21) ;
une première fente (28) formée entre les deux pièces adjacentes (13, 14) de manière à s'étendre dans une direction circonférentielle (Z) de la surface de cavité de forme annulaire (7),
**caractérisé par**
un jeu (30) formé entre le bloc (6) et le support (5), dans lequel la première fente (28) s'étend depuis la surface de cavité de forme annulaire (7) vers le jeu (30) au niveau d'une surface postérieure (10).

2. Moule selon la revendication 1, dans lequel
un canal (42, 52) pour un écoulement d'air est formé de manière à assurer une communication entre le jeu (30) et l'extérieur, et à s'étendre à travers les pièces semblables à des plaques (13, 14) et la première fente (28), et
le canal (42, 52) assure une communication entre le jeu (28) et l'extérieur via la première fente (28).

3. Moule selon la revendication 2, comprenant en outre une première cale (27) interposée entre les deux pièces adjacentes (13, 14), dans lequel
la première fente (28) est formée par la première cale (27).

4. Moule pour un pneumatique, qui comporte une surface de cavité de forme annulaire (72) formée dans une surface intérieure de lui-même, le moule comprenant :
un bloc (63) ayant une pluralité de pièces alignées semblables à des plaques (65) ;
un support (62) ayant un évidement (81) dans lequel le bloc (63) est amené à se loger ;
un élément de fixation qui fixe de façon détachable dans l'évidement (81) le bloc (63) logé dans l'évidement (81) ;
**caractérisé par**
une seconde fente (71) qui est formée entre les deux pièces adjacentes (65) de manière à s'étendre dans une direction axiale (Y) de la surface de cavité de forme annulaire (72),
et en ce que le moule comprend en outre :
un jeu (86) formé entre le bloc (63) et le support (62), tel que la seconde fente (71) s'étend depuis la surface de cavité de forme annulaire (72) vers le jeu (86) au niveau d'une surface postérieure (73).

5. Moule selon la revendication 4, dans lequel
le bloc (63) inclut une pluralité d'unités (66) alignées dans la direction axiale (Y) de la surface de cavité de forme annulaire (72), et
une troisième fente (79) formée entre les deux unités adjacentes (66) de manière à s'étendre dans une direction circonférentielle (Z) de la surface de cavité de forme annulaire (72).

6. Moule selon la revendication 5, comprenant en outre une seconde cale (70) interposée entre les deux pièces adjacentes (65) ; et une troisième cale (78) interposée entre les deux unités adjacentes, dans lequel
la seconde fente (71) est formée par la seconde cale (70), et
la troisième fente (79) est formée par la troisième cale (78).

7. Procédé pour fabriquer un moule (1) pour un pneumatique, le procédé comprenant les étapes consistant à :
former un matériau de base pour un bloc (36, 96) en fixant une pluralité de matériaux de base (32, 92, 33, 93) pour une pièce semblable à une plaque, dans un état aligné ;
former un évidement (21, 81) pour loger le matériau de base pour un bloc (36, 96), dans un matériau de base pour un support (31, 91) par une technique de taille ;
loger le matériau de base pour un bloc (36, 96) dans l'évidement (21, 81) du matériau de base (31, 91) pour un support ;
former un matériau de base pour un segment (37, 97) en fixant de façon détachable à l'évidement (21, 81) le matériau de base pour un bloc (36, 96) logé dans l'évidement en utilisant un élément de fixation ;
former un segment (2, 41, 51, 61) en taillant le matériau de base pour un segment (37, 97) afin de former une surface de cavité (7, 72) ; et
former le moule (1) en connectant une pluralité de segments (2, 41, 51, 61) les uns aux autres,
dans lequel
dans l'étape de formation du matériau de base pour un bloc (36, 96), une fente (28, 71) est formée en prévoyant une cale (27, 70) entre les matériaux de base pour pièces adjacentes (32, 92, 33, 93), et
dans l'étape de formation du segment (2, 41, 51, 61), la fente (28, 71) est exposée dans la surface de cavité (7, 72),
**caractérisé en ce que** le procédé comprend en outre
la formation d'un jeu (30, 86) entre le matériau de base pour un bloc (36, 96) et le matériau de base pour un support (31, 91), tel que la fente (28, 71) s'étend depuis la surface de cavité (7, 72) vers le jeu (30, 86) au niveau d'une surface postérieure (10, 73).

8. Procédé pour fabriquer un pneumatique en utilisant le moule (1) selon l'une quelconque des revendications 1 à 6, le procédé comprenant les étapes consistant à :
obtenir une couverture crue par formation préalable ;
placer la couverture crue dans un moule ayant une surface de cavité (7, 72) formée dans une surface intérieure de lui-même ; et
mettre sous pression et chauffer la couverture crue dans le moule (1).
